# EUROPEAN PATENT APPLICATION

(11) **EP 4 759 568 A1**
(43) Date of publication of application: **17.06.2026**
(21) Application number: 23961730.1
(22) Date of filing: 18.12.2023
(51) Int. Cl.: B60C 23/04

(54) **TIRE PRESSURE SENSOR ACTIVATION METHOD, APPARATUS AND SYSTEM**

(71) Applicant: Hamaton Automotive Technology Co., Ltd., Linping District Hangzhou, Zhejiang 311100 (CN)
(72) Inventor: ZHANG, Jianer, Hangzhou, Zhejiang 311100 (CN); DING, Haijun, Hangzhou, Zhejiang 311100 (CN); YU, Mingguang, Hangzhou, Zhejiang 311100 (CN); LV, Chengqi, Hangzhou, Zhejiang 311100 (CN)
(74) Representative: 2SPL Patentanwälte PartG mbB
(86) International application number: PCT/CN2023/139408
(87) International publication number: WO 2025/129379

(57) **Abstract**

A tire pressure sensor activation method, apparatus, and system. The method is applied to an activation system (30) comprising an activation terminal (10), a tire pressure sensor (32), a target vehicle (33), and an electronic device (31) having an activation client running thereon, wherein the tire pressure sensor (32) is used for being mounted on a target tire of the target vehicle (33). The method comprises: the activation client instructs the activation terminal (10) to write target communication parameters into the tire pressure sensor (32), and instructs the activation terminal (10) having established a connection with the target vehicle (33) by means of an OBD interface (14) to send a target sensor identifier to the target vehicle (33); and the mounted tire pressure sensor (32) submits state-related data of the target tire to the target vehicle (33) on the basis of the written target communication parameters, wherein the state-related data comprises the target sensor identifier and tire state data collected by the tire pressure sensor (32). According to the system, controlling the activation terminal (10) by means of the electronic device (31) achieves light weight and miniaturization of the activation terminal (10), thereby reducing the hardware cost and use cost of the activation process of the tire pressure sensor (32), and significantly decreasing the cost and increasing the benefit.

## Description

### TECHNICAL FIELD

This application relates to the field of vehicles, and in particular, to a tire pressure sensor activation method, apparatus, and system.

### BACKGROUND

Tire Pressure Monitor System (TPMS) is referred to as tire pressure monitoring system. The function of TPMS is to automatically monitor tire pressure in real time during a driving process of the vehicle, and to issue an alert for a tire leak and low pressure to ensure driving safety. The TPMS mainly includes a tire pressure sensor (or referred to as a tire pressure sensor or a TPMS sensor), a microcontroller unit (MCU), a radio frequency module, and an antenna.

At present, the tire pressure sensor is usually a wireless sensor, that is, after collecting signals related to parameters such as tire pressure, the tire pressure sensor will encode and modulate the signals into radio frequency signals and transmit the radio frequency signals through an antenna, so that the receiving apparatus of the vehicle-machine system receives and decodes the radio frequency signals to obtain the parameter values collected by the tire pressure sensor.

For a tire pressure sensor mounted on a tire of a vehicle, to ensure that a radio frequency signal sent by the sensor can be accurately received and identified by the vehicle, the tire pressure sensor needs to be activated during mounting (such as factory mounting or replacement during maintenance), so that the sensor and the vehicle can identify each other to implement normal communication.

In the related art, a dedicated activation tool is usually employed for activation processing. For example, the dedicated activation tool is connected to the vehicle through a special connection line, or a vehicle communication interface (VCI) device is connected to the vehicle through an OBD interface, where the dedicated activation tool and the VCI device are connected through Bluetooth, so that the learning matching of the device is implemented by operating the device through an operation interface of the VCI device.

However, the above matching manners in the related art usually require devices such as special tools (dedicated learning tools, VCI devices, etc.) and dedicated connection lines, etc., which are not only bulky and inconvenient to carry, but also expensive, and involve relatively complex operations leading to a high barrier of use, resulting in high hardware cost and use cost, which is urgently to be improved.

### SUMMARY

The present disclosure provides a tire pressure sensor activation method, apparatus, and system, to at least resolve a technical problem in a related technology. Technical solutions of the present disclosure are as follows.

According to a first aspect of the examples of the present disclosure, a tire pressure sensor activation method is provided, where the method is applied to an activation system, the activation system includes an activation terminal, a tire pressure sensor, a target vehicle, and an electronic device running an activation client, the tire pressure sensor is configured to be mounted on a target tire of the target vehicle, and the method includes:
instructing, by the activation client, the activation terminal to write target communication parameters of the target vehicle into the tire pressure sensor;
sending, by the activation terminal, a target sensor identifier of the tire pressure sensor to the target vehicle under an instruction of the activation client after the activation terminal establishes a connection with the target vehicle through an on-board diagnostics (OBD) interface; and
submitting, by the mounted tire pressure sensor, state-related data of the target tire to the target vehicle according to the written target communication parameters, wherein the state-related data comprises the target sensor identifier and tire state data collected by the tire pressure sensor.

According to a second aspect of the examples of the present disclosure, a tire pressure sensor activation method is provided, where the method is applied to an activation client running on an electronic device in an activation system, the activation system further includes an activation terminal, a tire pressure sensor, and a target vehicle, the tire pressure sensor is configured to be mounted on a target tire of the target vehicle, and the method includes:
instructing the activation terminal to write target communication parameters of the target vehicle into the tire pressure sensor, wherein the written target connection parameters are used by the mounted tire pressure sensor to submit state-related data of the target tire to the target vehicle; and
instructing the activation terminal that establishes a connection with the target vehicle through an OBD interface to send a target sensor identifier of the tire pressure sensor to the target vehicle, wherein the state-related data comprises the target sensor identifier and tire state data collected by the tire pressure sensor.

According to a third aspect of the examples of the present disclosure, a tire pressure sensor activation method is provided, where the method is applied to an activation terminal in an activation system, the activation system further includes a tire pressure sensor, a target vehicle, and an electronic device running an activation client, the tire pressure sensor is configured to be mounted on a target tire of the target vehicle, and the method includes:
writing target communication parameters of the target vehicle into the tire pressure sensor under an instruction of the activation client; and
after establishing a connection with the target vehicle through an OBD interface, sending a target sensor identifier of the tire pressure sensor to the target vehicle under an instruction of the activation client, wherein state-related data of the target tire submitted by the mounted tire pressure sensor to the target vehicle according to the written target communication parameters comprises the target sensor identifier and tire state data collected by the tire pressure sensor.

According to a fourth aspect of the examples of the present disclosure, a tire pressure sensor activation system is provided, where the activation system includes an activation terminal, a tire pressure sensor, a target vehicle, and an electronic device running an activation client, and the tire pressure sensor is configured to be mounted on a target tire of the target vehicle, where
the activation client is configured to instruct the activation terminal to write target communication parameters of the target vehicle into the tire pressure sensor;
the activation terminal is configured to send a target sensor identifier of the tire pressure sensor to the target vehicle under an instruction of the activation client after establishing a connection with the target vehicle through an OBD interface; and
the tire pressure sensor is configured to submit state-related data of the target tire to the target vehicle according to the written target communication parameters after being mounted, wherein the state-related data comprises the target sensor identifier and tire state data collected by the tire pressure sensor.

According to a fifth aspect of the examples of the present disclosure, a tire pressure sensor activation apparatus is provided, where the apparatus is applied to an activation system, the activation system includes an activation terminal, a tire pressure sensor, a target vehicle, and an electronic device running an activation client, the tire pressure sensor is configured to be mounted on a target tire of the target vehicle, and the apparatus includes:
a writing instruction unit, configured to cause the activation client to instruct the activation terminal to write target communication parameters of the target vehicle into the tire pressure sensor;
a sending instruction unit, configured to cause the activation terminal, after establishing a connection with the target vehicle through an on-board diagnostic (OBD) interface, to send a target sensor identifier of the tire pressure sensor to the target vehicle under an instruction of the activation client; and
a data submission unit, configured to enable the mounted tire pressure sensor to submit state-related data of the target tire to the target vehicle according to the written target communication parameters, wherein the state-related data comprises the target sensor identifier and tire state data collected by the tire pressure sensor.

According to a sixth aspect of the examples of the present disclosure, a tire pressure sensor activation apparatus is provided, where the apparatus is applied to an activation client running on an electronic device in an activation system, the activation system further includes an activation terminal, a tire pressure sensor, and a target vehicle, the tire pressure sensor is configured to be mounted on a target tire of the target vehicle, and the apparatus includes:
a writing instruction unit, configured to instruct the activation terminal to write target communication parameters of the target vehicle into the tire pressure sensor, wherein the written target connection parameters are used by the mounted tire pressure sensor to submit state-related data of the target tire to the target vehicle; and
a sending instruction unit, configured to instruct the activation terminal that establishes a connection with the target vehicle through an OBD interface to send a target sensor identifier of the tire pressure sensor to the target vehicle, wherein the state-related data comprises the target sensor identifier and tire state data collected by the tire pressure sensor.

According to a seventh aspect of the examples of the present disclosure, a tire pressure sensor activation apparatus is provided, where the apparatus is applied to an activation terminal in an activation system, the activation system further includes a tire pressure sensor, a target vehicle, and an electronic device running an activation client, the tire pressure sensor is configured to be mounted on a target tire of the target vehicle, and the apparatus includes:
a parameter writing unit, configured to write target communication parameters of the target vehicle into the tire pressure sensor under an instruction of the activation client; and
an identifier sending unit, configured to, after establishing a connection with the target vehicle through an OBD interface, send a target sensor identifier of the tire pressure sensor to the target vehicle under an instruction of the activation client, wherein state-related data of the target tire submitted by the mounted tire pressure sensor to the target vehicle according to the written target communication parameters comprises the target sensor identifier and tire state data collected by the tire pressure sensor.

According to an eighth aspect of the examples of the present disclosure, an activation terminal is provided, where the activation terminal includes a control module and a first antenna module, a second antenna module, an OBD interface, and a power module that are connected to the control module, where
the activation terminal establishes a wireless connection with an electronic device through the first antenna module, establishes a wireless connection with a tire pressure sensor through the second antenna module, and connects to a target vehicle through the OBD interface; and
the activation terminal is configured to write target communication parameters of the target vehicle into the tire pressure sensor under an instruction of an activation client running in the electronic device, and send a target sensor identifier of the tire pressure sensor to the target vehicle under an instruction of the activation client.

According to a ninth aspect of the examples of the present disclosure, a tire pressure sensor is provided, where the tire pressure sensor is configured to be mounted on a target tire of a target vehicle, and the tire pressure sensor is configured to cooperate with an activation terminal, the target vehicle, and an electronic device running an activation client to implement the tire pressure sensor activation method according to any one of the first aspect to the third aspect.

According to a tenth aspect of the examples of the present disclosure, a target vehicle is provided, where the target vehicle is equipped with a tire pressure sensor, and the target vehicle is configured to cooperate with an activation terminal, the tire pressure sensor, and an electronic device running an activation client to implement the tire pressure sensor activation method according to any one of the first aspect to the third aspect.

The technical solutions provided in the examples of the present disclosure bring at least the following beneficial effects.

It can be seen from the foregoing example that, in this solution, through mutual cooperations of devices in the activation system, on the one hand, the target sensor identifier of the tire pressure sensor can be sent to the target vehicle, so that the target vehicle identifies the sensor (that is, the learning process); on the other hand, the target communication parameters of the target vehicle can be written into the tire pressure sensor (that is, the programming process), enabling the tire pressure sensor to send the state-related data according to the parameters and to be successfully identified by the target vehicle. The tire pressure sensor mounted in the target tire may, after collecting the tire state data of the tire, send the tire state data including the target sensor identifier and the tire state data to the target vehicle, so that the target vehicle identifies, according to the target sensor identifier, that the tire state data comes from the tire pressure sensor (rather than from a tire pressure sensor mounted on another tire) and performs subsequent processing such as displaying the data or making a determination based on the data. It can be seen that the activation system in this solution may implement a complete activation process including programming and learning for the tire pressure sensor, to ensure that the mounted tire pressure sensor can operate normally in cooperation with the target vehicle.

In addition, the foregoing activation system includes a tire pressure sensor, a target vehicle, an activation terminal, and an electronic device, and only a conventional electronic device is introduced compared to a related technical solution. Compared with special tools in the related art, the activation terminal in the activation system may be connected to the target vehicle through its own OBD interface, and wirelessly connected to the electronic device and the tire pressure sensor through the built-in antenna module, so there is no need for expensive (dedicated learning tools, VCI devices or special connection lines, etc.) devices, which significantly reduces the hardware cost of the activation system. In addition, since the newly introduced electronic device may be a conventional electronic device such as a mobile phone or a tablet computer, etc., and such a device itself has a display function and a rich human-machine interface, based on the electronic device and the wireless connection, the user may control the activation terminal only by performing a simple operation in the operation interface of the electronic device, which not only lower an operating barrier and a use barrier of the user, but also effectively simplifies a hardware structure and software logic of the activation terminal, and helps implement miniaturization, portability, and minimal operation of the activation terminal. Thus, the activation system in the present disclosure controls the activation terminal by using the electronic device, implementing lightweight and miniaturization of the activation terminal, thereby reducing hardware costs and use costs in a tire pressure sensor activation process, and significantly reducing costs and improving efficiency.

It is to be understood that both the foregoing general description and the following detailed description are for example and explanation only and do not limit the present disclosure.

### BRIEF DESCRIPTION OF DRAWINGS

The accompanying drawings, which are incorporated in and constitute a part of this specification, illustrate examples consistent with the present disclosure and, together with the specification, serve to explain the principle of the present disclosure, and do not constitute an undue limitation on the present disclosure.
FIG. 1 illustrates a schematic diagram of an internal structure of an activation terminal according to an example of the present disclosure.
FIG. 2 illustrates a schematic diagram of an external view of an activation terminal according to an example of the present disclosure.
FIG. 3 illustrates a schematic architectural diagram of an activation system according to an example.
FIG. 4 to FIG. 6 illustrate flowcharts of one or more tire pressure sensor activation methods according to examples of the present disclosure.
FIG. 7 to FIG. 9 illustrate block diagrams of one or more tire pressure sensor activation apparatuses according to examples of the present disclosure.

### DETAILED DESCRIPTION

In order to enable those of ordinary skill in the art to better understand the technical schemes of the present disclosure, the technical schemes in examples of the present disclosure will be clearly and completely described in conjunction with the accompanying drawings.

It should be noted that the terms "first", "second", and the like in the specification, claims, and accompanying drawings of the present disclosure are intended to distinguish between similar objects but do not necessarily indicate a specific order or sequence. It should be understood that the data used in such way is interchangeable in proper circumstances, so that the examples of the present disclosure described herein can be implemented in a sequence other than those shown or described herein. The implementations described in the following examples do not represent all implementations consistent with the present disclosure. Rather, they are merely examples of apparatuses and methods consistent with some aspects of the present disclosure as detailed in the appended claims.

To solve the foregoing technical problems in the related art, the present disclosure provides an activation terminal, an activation system to which the activation terminal belongs, and a tire pressure sensor activation solution implemented based on the activation system. The following provides detailed descriptions with reference to the accompanying drawings.

The present disclosure provides an activation terminal, where the activation terminal includes a control module, a first antenna module, a second antenna module, an OBD interface, and a power module that are connected to the control module.

The first antenna module is configured to establish a first wireless connection with an electronic device running an activation client, where the activation terminal is configured to receive, through the first wireless connection, commands or data sent by the activation client.

The second antenna module is configured to establish a second wireless connection with a tire pressure sensor, where the activation terminal is configured to write the target communication parameters of a target vehicle into the tire pressure sensor through the second wireless connection under instruction of the activation client.

The OBD interface is configured to establish a connection with the target vehicle, where the activation terminal is configured to send a target sensor identifier of the tire pressure sensor to the target vehicle through the connection under instruction of the activation client; and the mounted tire pressure sensor is configured to submit state-related data of the target tire to the target vehicle according to the written target communication parameters, where the state-related data includes the target sensor identifier and tire state data collected by the tire pressure sensor.

Corresponding to the OBD interface (hereinafter referred to as a first OBD interface) on the activation terminal, a corresponding OBD interface (hereinafter referred to as a second OBD interface) may also be assembled on the target vehicle, so that connection between the activation terminal and the target vehicle may be implemented based on the above two OBD interfaces. For example, under a condition that the first OBD interface is a male connector and the second OBD interface is a female connector, the male connector may be directly inserted into the female connector to implement the connection. For another example, if a space at which the second OBD interface is located (for example, below a steering wheel or an instrument panel) is narrow and inconvenient for operations, a connection line complying with an OBD interface protocol may be used to connect the first OBD interface and the second OBD interface. It may be understood that regardless of a manner in which the connection is implemented, the first OBD interface and the second OBD interface are both connections established based on physical entities such as cables and/or pins, and therefore the connection established between the activation terminal and the target vehicle through the foregoing OBD interfaces should be understood as a wired connection.

It can be seen that the activation terminal establishes the first wireless connection with the electronic device through the first antenna module, establishes the second wireless connection with the tire pressure sensor through the second antenna module, and establishes the wired connection with the target vehicle through the OBD interface (that is, the first OBD interface). The activation terminal cooperates with the tire pressure sensor, the target vehicle, and the electronic device running the activation client to implement the tire pressure sensor activation method described in any one of the following examples.

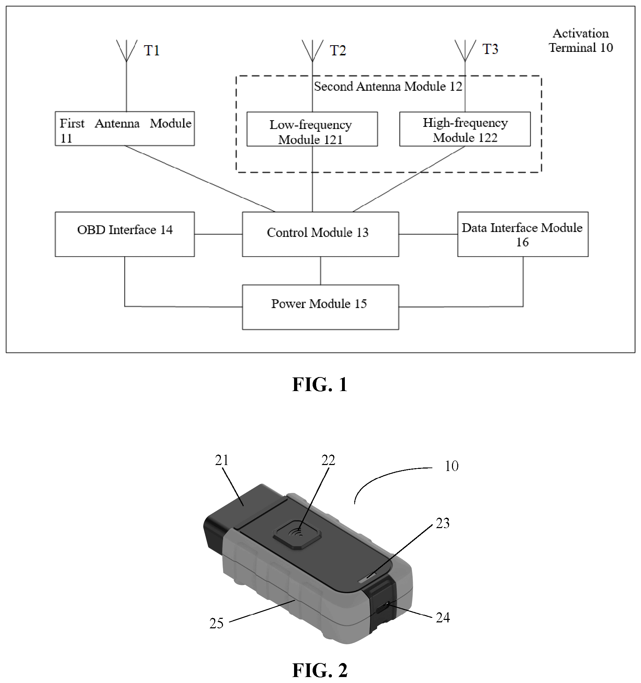

As shown in FIG. 1, the activation terminal 10 includes a first antenna module 11, a second antenna module 12, a control module 13, an OBD interface 14, and a power module 15. The modules except the control module 13 are respectively connected to the control module 13.

In an example, the control module 13 may include a computing sub-module (e.g., CPU, etc.), a storage sub-module (e.g., memory, memory chip, etc.), and necessary peripheral circuits. Other modules connected to the control module 13 may work normally under the control of the control module 13.

In an example, the first antenna module 11 may include an antenna T1 and a first signal processing circuit. It should be noted that although the antenna T1 and the first antenna module 11 are respectively illustrated as two mutually independent parts, the antenna T1 should still be understood as a part of the first antenna module 11, that is, the antenna T1 and the first signal processing circuit (not shown in the figure) jointly constitute the first antenna module 11. The antennas T2 and T3 in the following are similar to the antenna T1, and details are not described again. The first antenna module 11 may be configured to receive/transmit (that is, receive and/or send, the same in the following) a wireless signal, so as to establish a wireless connection (that is, the foregoing first wireless connection) with an electronic device in an activation system, and perform data interaction with an activation client running in the electronic device. For example, the first wireless connection established between the activation terminal 10 and the mobile phone 31 through the first antenna module 11 may be a Bluetooth connection, a WiFi connection, or the like (for example, the user may operate the activation terminal 10 and the mobile phone 31 to perform Bluetooth signal pairing and connection, or may also operate the mobile phone 31 to enable a WiFi hotspot and operate the activation terminal 10 to connect to the hotspot, to establish a WiFi connection with the mobile phone 31). In addition, the activation terminal 10 may further establish an infrared connection with the electronic device based on corresponding hardware, and a connection manner for the activation terminal 10 and the electronic device is not limited in the present disclosure. Using a Bluetooth connection as an example, the antenna T1 may receive a Bluetooth signal sent by the electronic device (in this case, the antenna T1 serves as a receiving antenna), then the first signal processing circuit demodulates (or decodes) the Bluetooth signal, and sends a processing result to the control module 13; and the antenna T1 may also send, to the surrounding space, a Bluetooth signal output after being modulated (or encoded) by the electronic device (in this case, the antenna T1 serves as a transmitting antenna).

In an example, the second antenna module 12 may include a low-frequency module 121 and a high-frequency module 122, and the activation terminal 10 may establish a wireless connection (i.e., the foregoing second wireless connection) with the tire pressure sensor 32 through the second antenna module 12. For example, the wireless connection may be a Near field communication (NFC) connection or a wireless radio frequency connection (such as Radio-frequency identification (RFID)), which is not limited in the present disclosure. When establishing an NFC connection or a wireless radio frequency connection between the activation terminal 10 and the tire pressure sensor 32, the two devices may implement millisecond-level device connection (or referred to as pairing) through a wireless wakeup signal, and the device that is woken up (for example, the tire pressure sensor 32) is essentially equivalent to a passive device. During the connecting process, there is no need for the user to manually implement operations similar to "paring" and "connection confirmation" in Bluetooth and WiFi technologies, which facilitates rapid connection and information interaction between devices. However, it should be noted that although the establishment process of the foregoing NFC connection or wireless radio frequency connection is extremely fast and is usually completed together with the data transmission process, the foregoing connection should still be considered as a wireless connection, that is, the connection established between the activation terminal 10 and the tire pressure sensor 32 is a wireless connection.

For example, the low-frequency module 121 and the high-frequency module 122 may respectively be configured to receive/transmit wireless signals in different forms. For example, the low-frequency module 121 may be configured to receive/transmit NFC signals, and the high-frequency module 122 may be configured to receive/transmit RFID signals, etc. In another example, the low-frequency module 121 and the high-frequency module 122 may further cooperate with each other to send or receive wireless signals in a same form, respectively. For example, the low-frequency module 121 may be configured to transmit low-frequency radio frequency signals of 125 KHz, and the high-frequency module 122 may be configured to receive high-frequency radio frequency signals of 315 MHz or 433 MHz.

Taking the wireless connection being an NFC connection as an example, the antenna T2 and the antenna T3 may serve as a receiving antenna and a transmitting antenna for NFC signals, respectively. Naturally, the tire pressure sensor that needs to establish an NFC connection with the activation terminal 10 should also include corresponding NFC components and antenna components. Since the activation terminal 10 needs to read data (such as the sensor identifier) from the tire pressure sensor and write data (such as the target communication parameters of the target vehicle), the activation terminal 10 and the tire pressure sensor may establish the NFC connection in point-to-point mode (P2P mode), so that the two parties implement efficient bidirectional data exchange. In this case, the establishment speed of the NFC connection is much faster than that of the infrared connection and the Bluetooth connection, which facilitates improving interaction efficiency between the data activation terminal 10 and the tire pressure sensor.

Note that when the electronic device establishes the third wireless connection with the vehicle, the activation terminal establishes the foregoing wired connection to the target vehicle through the OBD interface, and the tire pressure sensor transmits the state-related data to the target vehicle, the vehicle should be in a startup state (or referred to as a power-on state), that is, the vehicle-machine system of the target vehicle (at least its communication system) should be turned on and run.

FIG. 2 illustrates a schematic diagram of an external view of an activation terminal according to an example of the present disclosure. As shown in FIG. 2, an NFC sensing area 22 is disposed at a center position of a front surface of the activation terminal 10, where an antenna (for example, the foregoing antenna T2 and/or antenna T3, which are/is not shown in the figure) for NFC signals is connected below the sensing area. During use, the tire pressure sensor (for example, a sensing area of the sensor) may be placed in the NFC sensor area 22, and the activation terminal 10 is triggered to establish an NFC connection with the tire pressure sensor 32 through corresponding operations.

Similar to the first antenna module 11, the low-frequency module 121 may include the antenna T2 and a low-frequency signal processing circuit, and the high-frequency module 122 may include the antenna T3 and a high-frequency signal processing circuit. Using a scenario in which the low-frequency module 121 transmits a low-frequency radio frequency signal and the high-frequency module 122 receives a high-frequency radio frequency signal as an example, the low-frequency signal processing circuit is configured to modulate the low-frequency radio frequency signal and transmit the signal to the surrounding space through the antenna T2, so that the antenna in the tire pressure sensor receives the signal; correspondingly, after the antenna T3 receives the high-frequency radio frequency signal transmitted by the tire pressure sensor, the high-frequency signal processing circuit may perform processing such as noise reduction and demodulation, etc. on the signal, and transmit the processing result to the control module 13.

In addition, any one of the first antenna module 11, the low-frequency module 121, and the high-frequency module 122 may be configured to operate in a simplex mode or a duplex mode according to the type of the established wireless connection or the software function to be implemented by the activation terminal 10. Specifically, if any module operates in the simplex mode, at any moment, the antenna of the module only receives wireless signals or only transmits wireless signals; if any module operates in the duplex mode, the antenna of the module may both receive wireless signals and transmit wireless signals at the same moment.

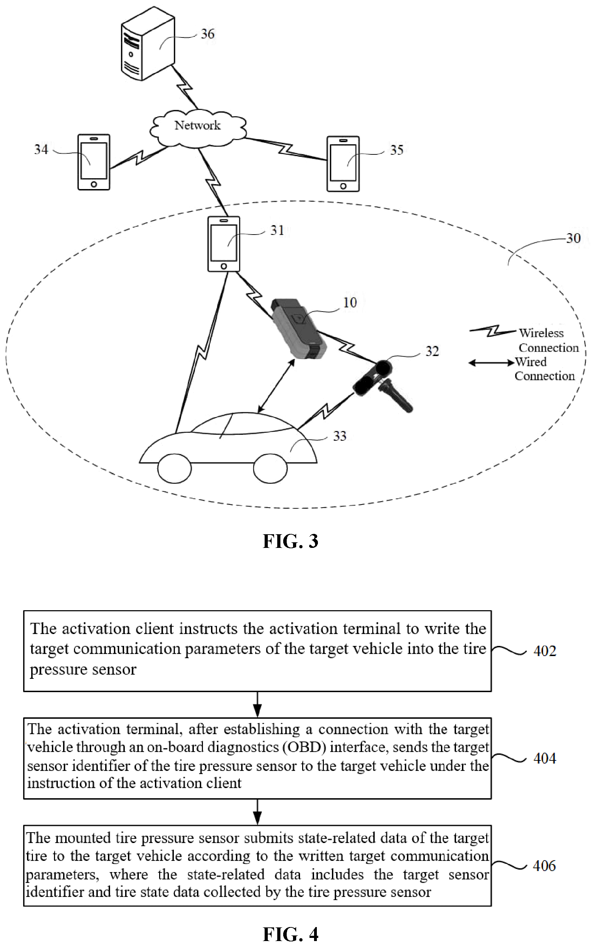

In an example, the OBD interface 14 may support OBD-II (or OBD2, i.e., the second-generation on-board diagnostics) protocol or OBD-III (or OBD3, i.e., the third-generation on-board diagnostics) protocol. The activation terminal 10 may establish a wired connection with an OBD interface (i.e., the second OBD interface) of the target vehicle through the OBD interface 14, to exchange data with the target vehicle through the connection. As shown in FIG. 3, an OBD interface 21 is disposed at a front end of the activation terminal 10. For specific meanings of pins (not shown in the figure) in the interface, reference may be made to descriptions in the related art. Since OBD interfaces typically feature a fool-proof design, for example, when the OBD interface of the target vehicle is a female socket, the OBD interface 21 may be a male connector.

In an example, the activation terminal may further include a data interface module configured to connect to a data management device, so that the activation terminal performs data interaction with the data management device. As shown in FIG. 2, a data interface 24 is disposed at the lower rear of the activation terminal 10, for example, the data interface may be a USB interface, a Type-C interface, or the like. The data management device may perform processing such as storing, editing, and/or analysis on data. The data before processing may be obtained from the activation terminal, or the processed data may be transmitted to the activation terminal, which will not be repeated. For example, the data management device may be a device such as a mobile phone, a computer, or a tablet, etc., and the device may be an electronic device (for example, the foregoing electronic device in which the activation client is located) that needs to establish a wireless connection with the activation terminal, or may be another electronic device. In some examples, the data management device may further be a storage device such as a USB flash disk or an SD card, etc., so that the storage diagnosis may send the current data to the device for storage or read the data stored in the device, which will not be repeated.

Similar to the foregoing wired connection between the activation terminal and the target vehicle implemented through the OBD interfaces, the connection between the activation terminal and the data management device implemented through the data interface module may also be a wired connection, for example, a direct plug connection or a connection via a data transmission line. A structure of a physical interface of a physical transmission line configured to connect the activation terminal 10 and the data management device, as well as a communication protocol supported by the physical interface, should match the data interface 24. After establishing the wired connection with the activation terminal 10 through the physical transmission line, the data management device may write data (for example, update system software of the activation terminal 10) into the activation terminal 10 or read data (for example, read a fault code read by the activation terminal 10 from the target vehicle and cached locally, or a matching record locally stored by the activation terminal 10). Transmitting the foregoing data through a wired connection may avoid an abnormality such as a data loss or a read/write failure that may be caused by wireless transmission, thereby improving a success rate of data interaction between the activation terminal and the data management device.

In an example, the power module 15 is configured to supply power to other modules (except the power module 15). For example, the power module 15 is connected with the control module 13, and thus may directly supply power to the control module 13. For another example, since the control module 13 is connected with the first antenna module 11 and the second antenna module 12, the power module 15 may further supply power to the first antenna module 11 and the second antenna module 12 indirectly through the control module 13, and a specific power supply manner is not limited in the present disclosure.

The power module 15 includes a battery, and the battery may be a disposable battery (such as a button battery, or a cylindrical battery such as AA-size battery or AAA-size battery); or a rechargeable battery that can be charged and discharged multiple times may be used to improve the operating time of the activation terminal 10 and reduce the maintenance difficulty. In addition, in a case where the battery is a disposable battery, the battery may be detachably arranged to allow the user to easily replace the battery; and in a case where the battery is a rechargeable battery, the battery may be detachably arranged to facilitate maintenance, and may also be non-detachably arranged to improve the compactness of the activation terminal 10, thereby facilitating miniaturization.

In a case where the battery is a rechargeable battery, the OBD interface 14 may also be connected to the power module 15, so that the target vehicle charges the battery through a power pin of the OBD interface. And/or, the data interface module 16 may also be connected to the power module 15, so that the data management device charges the battery through the power pin of the data interface. The other end of the physical connection line may also be directly connected to a power output interface to directly charge the rechargeable battery.

In an example, the activation terminal may further include an operation sensing module, which may be configured to sense a preset operation performed by the user on the activation terminal. For example, the operation sensing module may be a physical button, a physical lever, or the like. Taking a button as an example, when detecting that the user presses the button a single time, the activation terminal may write the target communication parameters of the target vehicle into the tire pressure sensor through the NFC connection in response to the operation, to implement "one-click writing" of the target communication parameters, thereby facilitating improving operation convenience for the user and overall matching efficiency.

In an example, the activation terminal may further include a state output module, which may be configured to output operating state information of the activation terminal. For example, the state output module may be an LED, a buzzer, a vibration motor, or the like. Taking LED 23 shown in FIG. 2 as an example, in a process that the activation terminal 10 writes the target communication parameters of the target vehicle into the tire pressure sensor through the NFC connection, the LED 23 may flash quickly, and may stop flashing after the writing is completed. For another example, in a process that the data interface 24 is connected to the power output interface and charges the rechargeable battery inside the activation terminal 10 through the connection, the LED may remain a solid color (such as red), and switch to another solid color (such as change to green) or directly turn off after being fully charged.

In an example, the surface of the housing of the activation terminal 10 may further be provided with anti-slip texture 25 to prevent the device from falling and being damaged due to sliding when the user holds the terminal. In addition, to improve the holding comfort and use experience of the user, the shape of the housing of the activation terminal 10 may also be set to better conform to the holding gesture of the user, which will not be repeated.

It should be noted that the shape of the activation terminal shown in FIG. 2 is merely an example, and in implementation practices, relative positions of parts such as each interface and sensing area included in the terminal may be properly set based on an actual situation, which is not limited in the present disclosure.

So far, the structure and functions of the activation terminal have been described. Based on the activation terminal, the present disclosure further provides a tire pressure sensor activation system, where the system includes an activation terminal, a tire pressure sensor, a target vehicle, and an electronic device running an activation client, and the tire pressure sensor is configured to be mounted on a target tire of the target vehicle.

The activation client is configured to instruct the activation terminal to write the target communication parameters of the target vehicle into the tire pressure sensor.

The activation terminal is configured to send the target sensor identifier of the tire pressure sensor to the target vehicle under the instruction of the electronic device after the activation terminal establishes a connection with the target vehicle through the OBD interface.

The tire pressure sensor is configured to submit state-related data of the target tire to the target vehicle according to the written target communication parameters after being mounted, where the state-related data includes the target sensor identifier and tire state data collected by the tire pressure sensor.

It should be noted that the activation process of the tire pressure sensor includes a programming phase and a learning phase. In the programming phase, the activation client instructs the activation terminal to write the target communication parameters to the tire pressure sensor (that is, the activation terminal writes the target communication parameters to the tire pressure sensor under the instruction of the activation client); in the learning phase, the activation terminal transmits the target sensor identifier of the tire pressure sensor to the target vehicle under the instruction of the electronic device. After the above programming and learning phases are completed, the activation process of the tire pressure sensor ends. After that, the tire pressure sensor may cooperate with the target vehicle to start normal operation, that is, for the tire state data collected by itself, the sensor may transmit the state-related data including the target sensor identifier and the tire state data to the target vehicle according to the target communication parameters written locally, for reception and identification by the target vehicle.

As shown in FIG. 3, the activation system 30 includes a mobile phone 31, an activation terminal 10, a tire pressure sensor 32, and a target vehicle 33. The electronic device (mobile phone 31) runs an activation client inside (which may be in a form of an APP, a Web application, a mini program, etc.), and the electronic device may establish a wireless connection (that is, the first wireless connection in the present disclosure, such as a Bluetooth connection or a WiFi connection) with the activation terminal 10. The activation terminal 10 may further establish a wireless connection (that is, the second wireless connection in the present disclosure, such as an NFC connection or a wireless radio frequency connection) with the tire pressure sensor 32. The mobile phone 31 may further establish a wireless connection (such as an NFC connection, not shown in the figure) with the tire pressure sensor 32. It can be seen that the electronic device, the tire pressure sensor, and the activation terminal in the system may interact with each other through wireless connections. In addition, the tire pressure sensor 32 and the target vehicle 33 may communicate through a wireless radio frequency connection. For example, the tire pressure sensor 32 may transmit radio frequency broadcast signals in a form of frequency shift keying (FSK), amplitude shift keying (ASK), phase shift keying (PSK), or the like to the surrounding space. Certainly, the target vehicle 33 should be equipped with a communication antenna to implement the wireless connection with the tire pressure sensor. It should be noted that the wireless connection established between any two parties is actually an end-to-end connection between the two parties. Actually, since interaction between devices in the activation system may be implemented based on the foregoing wireless connections, the system may implement an expected function of matching the tire pressure sensor without a special connection line, thereby simplifying the structure of the system and facilitating reducing costs. Certainly, the activation terminal 10 may establish a wired connection with the target vehicle 33 through the OBD interface, and details are not described again.

For example, in the activation system, the target vehicle may communicate with the tire pressure sensor through the foregoing wireless radio frequency connection (that is, data interaction is implemented). The first wireless connection between the electronic device and the activation terminal may be a Bluetooth connection or a WiFi connection. The second wireless connection between the activation terminal and the tire pressure sensor may be an NFC connection or a wireless radio frequency connection. In addition, a wireless connection such as an NFC connection or a wireless radio frequency connection, etc. may also be established between the electronic device and the tire pressure sensor for data interaction. Certainly, specific forms of the foregoing connections may also be properly set based on an actual situation, and the present disclosure does not impose a limitation in this regard.

The mobile phone 31 is only a type of electronic device that may be used by the user. In practice, the user may use any electronic device having a wireless connection function. For example, the electronic device may further be a tablet device, a notebook computer, a personal digital assistants (PDA), a wearable device (such as smart glasses, a smart watch, etc.), a virtual reality (VR) device, an augmented reality (AR) device, etc., and one or more examples of the present disclosure are not limited thereto. The mobile phone 31 may run a client program of the activation client. For example, the client program may be an application (APP), or may be a Web application (or referred to as a Web page) implemented based on a browser, or may be a mini program implemented based on another application. The APP usually needs to be preinstalled and started to run. The Web application and the mini program may be online "clients" built using HTML5 technology, and the running of such client programs usually does not need a specific "installation" step, but such client programs are integrated in a browser or other applications to run as independent pages or functional components (or referred to as plug-ins), which is specifically described herein. The activation client may provide an operable human-machine interface for the user. Based on this, the user may perform corresponding operations in the human-machine interface to implement the activation method described in the following. In practice, since the electronic device can display a human-machine interface for a user to operate, the activation terminal itself does not need to be equipped with a display component such as a screen, etc., thereby simplifying a hardware structure and software logic of the terminal and facilitating miniaturization of the terminal.

In addition, the activation system 30 may further include a server 36 deployed in the cloud, corresponding to the activation client running in the mobile phone 31, where a corresponding activation server may run in the server 36. The mobile phone 31 may obtain the target communication parameters of the target vehicle from the server 36 based on the vehicle model information of the target vehicle 33, and may further, after the tire pressure sensor 32 completes activation, upload data related to the activation process (hereinafter referred to as activation-related data) to the server 36, to efficiently store and manage the activation-related data in the cloud. The server 36 may be a physical server including an independent host, or the server 36 may be a virtual server or a cloud server carried by a host cluster, which is not limited in the present disclosure.

As described above, the tire pressure sensor 32 described in the present disclosure has a function of establishing a wireless connection, and may not only transmit a wireless radio frequency signal to the target vehicle 33, but also establish a second wireless connection in a form such as an NFC connection with the activation terminal 10. The brand, size, mounting location, specific communication manner, and the like of the tire pressure sensor 32 are not limited in the example of the present disclosure. Similarly, the target vehicle 33 described in the present disclosure may receive the wireless radio frequency signal transmitted by the tire pressure sensor 32, and may establish a wired connection with the activation terminal 10 through its own equipped OBD interface. The brand, model, number of tires, specific communication manner, and the like of the target vehicle 33 are not limited in the example of the present disclosure.

So far, the activation system has been described. Based on the foregoing activation system, the present disclosure further provides a tire pressure sensor activation method applied to the system. It should be understood that, in practice, the method needs to be implemented by cooperation among devices in the system.

FIG. 4 illustrates a flowchart of a tire pressure sensor activation method according to an example of the present disclosure. As shown in FIG. 4, the method is applied to an activation system. As described above, the system includes an electronic device, an activation terminal, a tire pressure sensor, and a target vehicle. The tire pressure sensor is configured to be mounted on a target tire of the target vehicle. The method may include the following steps 402-406.

Step 402: the activation client instructs the activation terminal to write the target communication parameters into the tire pressure sensor.

The tire pressure sensor in the present disclosure is a sensor that needs to be mounted on a target tire of a target vehicle. The target vehicle may be equipped with at least one tire, and the target tire may be any one of the tires, which may be a new tire or an old tire that has been repaired (such as tire repair). The tire pressure sensor may be a new tire pressure sensor that has never been used, or may be an old tire pressure sensor detached from the target tire, a previous tire of the target tire (that is, the target tire is used to replace the previous tire), another tire of the target vehicle, or any tire of another vehicle (but its function is normal, and it can still be activated and used). This solution may be applied to a production phase or a maintenance phase of a target vehicle. In an example, in the production phase, the tire pressure sensor to be mounted may be a new sensor, and before mounting the tire pressure sensor, the target tire has not been mounted with any tire pressure sensor and the tire pressure sensor to be mounted has not been used. In the maintenance phase, the tire pressure sensor to be mounted may be a new sensor or a sensor that has been used but is not damaged (can still be activated and used), and the target tire may be an old tire that has been repaired or an mounted new tire (for replacing an old tire having a fault).

In addition, the user in the present disclosure may be a production person who produces (or assembles) the target vehicle, a vehicle owner of the target vehicle, or a service person of the target vehicle (for example, an employee at a 4S shop or a service location). The user may run the activation client in an electronic device used by the user, for example, install a client APP and start to run the APP, or open a browser and log in to a client page. After logging in to the activation client is completed, the user may start to perform an activation-related operation on the tire pressure sensor based on the human-machine interaction interface provided by the client.

To further lower the operating barrier and learning costs of the user, the activation client may display guidance information such as a presentation animation, text or picture description to the user during an activation process, enabling the user to grasp the operation manner as quickly as possible. Of course, the above guidance information may also be displayed only when the user logs in for the first time or the first several times, to reduce the information display load of the activated client as much as possible and avoid disrupting skilled users.

Since wireless communication protocols used by vehicles of different brands, different models, or even different batches are usually different, to ensure that the tire pressure sensor can communicate properly with the target vehicle, target communication parameters of the target vehicle need to be first written into the tire pressure sensor, where the parameters may include target connection parameters (including a protocol stack of a communication protocol, a version number, field definitions of data packets, a data encryption manner, and the like). In addition, the target communication parameters may further include a target submission configuration parameter, which is configured to specify a submission manner (such as a submission period and a maximum interval duration) of the tire state data, where the submission manner can be identified and approved by the target vehicle, so that the activated tire pressure sensor can normally submit the tire state data collected by itself to the target vehicle in prescribed manner. It can be learned that the target communication parameters are configured to indicate (or notify) to the tire pressure sensor the manner of submitting the state-related data to the target vehicle, that is, the tire pressure sensor submits the state-related data to the target vehicle in a manner indicated by the parameters, so that the data can be successfully received and identified by the target vehicle.

In an example, the activation client may instruct the activation terminal to write the target communication parameters into the tire pressure sensor in a plurality of manners. For example, the activation client may first obtain the target communication parameters of the target vehicle, and send a parameter writing command including the parameters to the activation terminal, to instruct the activation terminal (by using the command) to write the target communication parameters into the tire pressure sensor. In this case, the activation client obtains, by itself, the target communication parameters and provides the target communication parameters to the activation terminal, which helps to make full use of a relatively strong data processing capability of the electronic device and simplify a processing logic of the activation terminal. In an example, the activation client may first determine parameter indication information of the target communication parameters, and then send a determining and writing command including the information to the activation terminal, to instruct the activation terminal (by using the command) to determine the target communication parameters based on the information and write the target communication parameters into the tire pressure sensor. In this case, the activation client instructs the activation terminal to obtain and write the target communication parameters, which helps simplify user operations at the activation client.

The activation client may obtain the target communication parameters of the target vehicle in a plurality of manners. In an example, in a case where the electronic device has established the third wireless connection (such as a Bluetooth, WiFi connection, etc.) with the target vehicle, the activation client may request and obtain the target communication parameters of the vehicle from the target vehicle through the wireless connection. The parameters may be pre-stored locally by the vehicle (for example, written locally when the vehicle leaves the production facility) or temporarily generated in response to the foregoing request, and details are not described again.

In another example, when a fourth wireless connection (which is not shown in the figure, and may be an NFC or radio frequency connection) is established between the electronic device and an activated tire pressure sensor mounted and activated on any tire of the target vehicle, the activation client may further read, through the wireless connection, the communication parameters written into the activated tire pressure sensor. Since the activated tire pressure sensor has been activated (that is, the sensor has uploaded the state-related data collected by itself to the target vehicle), this indicates that the tire pressure sensor can smoothly communicate with the target vehicle by using the communication parameters written into itself, and therefore, writing the communication parameters as the target communication parameters to the tire pressure sensor that needs to be mounted as a replacement this time can ensure that the tire pressure sensor can smoothly communicate with the target vehicle after being activated. The activated tire pressure sensor may be a working sensor on a normal tire of the target vehicle, or may be an old tire pressure sensor detached from the vehicle.

In yet another example, since vehicles of different models usually have different communication parameters, when determining the target communication parameters, the activation client may, in response to the user's operation of specifying a vehicle model, determine the target communication parameters that match the target vehicle model information according to the specified target vehicle model information of the target vehicle.

The target vehicle model information is a piece or a set of information that can characterize vehicle model information of the target vehicle, and is used to determine target communication parameters of the target vehicle, and may include but is not limited to a brand, model, year, batch, and the like. The activation client may determine the target vehicle model information in a plurality of manners. For example, if the user of the activation client already knows the vehicle model of the target vehicle (such as viewing the exterior of the vehicle body or consulting the information manual of the vehicle), the user may directly specify the corresponding target vehicle model information in the activation client. For example, the activation client may display an information input box, and the user inputs the target vehicle model information of the target vehicle into the information input box according to the actual situation of the target vehicle, enabling the activation client to acquire the information. Alternatively, the activation client may display a plurality of pieces of candidate vehicle model information to the user in list form, the user may browse the list, find (using keyword query if necessary) and select vehicle model information that meets the actual situation of the target vehicle, and the activation client may determine the information as the target vehicle model information. For example, the activation client may display a plurality of candidate brands to the user, and display each candidate vehicle model of the brand after the user selects a brand A; display each year of the vehicle model and its corresponding target communication parameters after the user further selects vehicle model type B; and after the user selects year C, the target communication parameters corresponding to year C are determined as the target vehicle model information of the target vehicle.

For another example, since the electronic device in which the activation client is located may perform data interaction with the target vehicle (that is, the foregoing third wireless connection may be established between the electronic device and the target vehicle), the activation client may also directly obtain the target vehicle model information of the target vehicle from the target vehicle. For example, under a condition that the third wireless connection is established between the electronic device and the target vehicle, the activation client may request from the target vehicle and obtain the target vehicle model information of the target vehicle. In this way, the target vehicle itself provides its target vehicle model information to the activation client, and this process does not require the user to participate in inputting or correcting information, which helps to avoid information errors that may be caused by human factors and improve the accuracy of the obtained target vehicle model information.

After determining the target vehicle model information, the activation client may further determine the target communication parameters matching the information in a plurality of manners. For example, related personnel may count vehicle model information and communication parameters of various vehicles in advance, and create a vehicle model parameter table for recording a correspondence between the vehicle model information and the communication parameters of the various vehicles. The communication parameters of any one of the vehicles may include only connection parameters of the vehicle, or may include the connection parameters and submission configuration parameters of the vehicle. The vehicle model parameter table may be locally maintained by the electronic device (for example, maintained as a configuration file of the activation client), or may be locally maintained by an activation server (which may run in the server 36 shown in FIG. 1) associated with the activation client, or may be locally written into the activation terminal in advance and maintained by the activation terminal.

If the electronic device locally stores the vehicle model parameter table, the activation client may query the target communication parameters corresponding to the target vehicle model information (determined in the foregoing example) from the vehicle model parameter table locally stored in the electronic device. In this way, the target communication parameters may be determined as quickly as possible in a local query manner without performing data interaction with other devices, and a query speed is relatively high. Certainly, since parameters such as the protocol stack usually have a large amount of data, to save local storage space of the data electronic device, the vehicle model parameter table maintained by the data electronic device may alternatively record only a correspondence between vehicle model information of a vehicle and an identifier of the target communication parameters (but not the target communication parameters themselves) of the vehicle. Therefore, after retrieving the identifier of the target communication parameters from the table in the foregoing manner, the activation client may send the identifier to the activation server to obtain the target communication parameters (represented by the identifier) returned by the activation server. If the activation server locally stores the vehicle model parameter table, the activation client may initiate a parameter obtaining request including the target vehicle model information to the pre-associated activation server, so that the activation server queries the target communication parameters corresponding to the target vehicle model information from the vehicle model parameter table maintained by itself in response to the request, and returns the retrieved parameters to the activation client; and the activation client may receive the parameters returned by the activation server. In this way, the electronic device does not need to locally store the vehicle model parameter table and perform the query operation, thereby saving local storage space of the electronic device and simplifying local processing logic of the electronic device, and helping to implement lightweight deployment of the activation client. Under a condition that the vehicle model parameter table is maintained by the activation server, if the network performance of the electronic device is relatively poor, the vehicle may be instructed to access the activation client to obtain the target communication parameters and return the target communication parameters to the activation client, thereby ensuring that the electronic device obtains the target communication parameters by using the powerful cloud access capability of the vehicle. As described above, after obtaining the target communication parameters, the activation client may send a parameter writing command including the target communication parameters to the activation terminal, to instruct the activation terminal to write the target communication parameters into the tire pressure sensor.

In addition, in the example where the activation client instructs the activation terminal to obtain and write the target communication parameters, in a case where the activation terminal maintains the vehicle model parameter table by itself, the activation terminal may query the target communication parameters corresponding to the target vehicle model information from the vehicle model parameter table locally stored in the activation terminal.

As described above, the activation client may send a parameter writing command including the target communication parameters to the activation terminal, to instruct the activation terminal to write the parameters into the tire pressure sensor. The activation client may implement the instruction in a plurality of manners. For example, in a case where the electronic device successfully establishes a first wireless connection (for example, a Bluetooth connection) with the activation terminal, the activation client may send the writing command including the target communication parameters to the activation terminal through the first wireless connection in response to a first sending operation performed by the user (for example, tapping a "issue parameter" virtual control on an activation interface of the activation client), to instruct the activation terminal to write the target communication parameters into the tire pressure sensor through a second wireless connection in response to the detected first writing operation. Thereafter, the user may perform the first writing operation on the activation terminal at an appropriate time (that is, perform the operation on the operation sensing module equipped on the activation terminal, for example, tapping a physical button for "confirm write"), to trigger the activation terminal to write the target communication parameters into the tire pressure sensor in response to the operation through the second wireless connection (for example, an NFC connection).

In another example, in a case where the electronic device successfully establishes the first wireless connection with the activation terminal, the activation client may send the target communication parameters to the activation terminal through the first wireless connection in response to the second sending operation performed by the user, and the activation terminal may locally cache the target communication parameters after receiving these parameters. Thereafter, the user may perform the second writing operation (such as tapping a "start writing" virtual control) on the activation client at an appropriate time, and at this time, the activation client sends the writing command for the target communication parameters (which have been sent) to the activation terminal in response to the second writing operation, to instruct the activation terminal to write the target communication parameters into the tire pressure sensor through the second wireless connection. In the foregoing manner, the sending process of the to-be-written target communication parameters (that is, the activation client sends the parameters to the activation terminal) and the writing process (that is, the activation terminal writes the parameters to the tire pressure sensor) are split, so that the user can first instruct to send the target communication parameters to the activation terminal for caching, and then directly operate the entity module of the activation terminal at an appropriate time to trigger writing or operate the virtual control in the interaction interface of the activation client to trigger writing, which can meet diversified operation requirements or habits of the user in a tire pressure sensor matching (especially vehicle maintenance) scenario, enabling smooth writing of the target communication parameters regardless of whether it occurs before or after the tire pressure sensor is mounted.

In another example, in a case where the electronic device successfully establishes the first wireless connection with the activation terminal and the activation terminal successfully establishes the second wireless connection with the tire pressure sensor, the activation client may also send the writing command including the target communication parameters to the activation terminal through the first wireless connection in response to a third writing operation performed by the user for the target communication parameters, to instruct the activation terminal to write the parameters into the tire pressure sensor through the second wireless connection. In this case, the writing command sent by the electronic device to the activation terminal has dual functions of "sending the target communication parameters" and "instructing to write the target communication parameters", and this manner is more suitable for writing the target communication parameters before mounting the tire pressure sensor. Still using FIG. 2 and FIG. 3 as an example, the user may establish a Bluetooth connection (or a WiFi connection) between the mobile phone 31 and the activation terminal 10 by operating the mobile phone 31 and the activation terminal 10, and attach the NFC sensing surface of the tire pressure sensor 32 to the NFC sensing area on the back of the mobile phone 31. At this point, the user may tap the "start writing" virtual control in the interface of the mobile phone 31. The activation client in the mobile phone 31 may, in response to the operation, send the parameter writing command including the target communication parameters to the activation terminal 10, and the activation terminal 10 may write the target communication parameters into the tire pressure sensor 32 in response to the command.

In an example, after obtaining the target communication parameters of the target vehicle, the activation client may instruct the activation terminal to write the parameters into the tire pressure sensor to be activated at various occasions. For example, before starting to mount the tire pressure sensor, the activation client may send the parameter writing command including the target communication parameters to the activation terminal to instruct the activation terminal to write the target communication parameters into the tire pressure sensor; correspondingly, the activation terminal may attempt to write the target communication parameters into the tire pressure sensor in response to the indication, and return a writing result (writing success or writing failure) to the activation client, and the activation client may output a mounting start prompt message to the user when determining that the target communication parameters are written successfully. Specifically, the mounting start prompt message may be output in any form such as displaying text or picture information, playing a voice, and flashing an indicator light. Taking displaying text as an example, text such as "parameter writing is successful, please start mounting the tire pressure sensor" or "writing is successful, please mount the sensor", etc. may be displayed in the message pop-up window of the client. In another example, the activation client may further instruct the activation terminal to write the target communication parameters into the tire pressure sensor after the tire pressure sensor has been mounted, for example, may send a writing trigger command including the target communication parameters to the activation terminal, to trigger the activation terminal to write the parameters. Since the tire pressure sensor has been mounted on the target vehicle at this time, even if it is determined that the writing is successful, the activation client does not need to display the foregoing mounting start prompt message, but may only display a writing success notification message (for example, text such as "writing successful").

Whether the activation client triggers the activation terminal to write the target communication parameters before the tire pressure sensor is mounted or after the mounting is completed may be determined by the user; or the user may perform a corresponding operation in the activation client according to an actual mounting situation, for example, the user may tap a virtual control such as "not mounted" or "mounted" to enter a writing trigger page, and on that page, trigger the activation terminal to write the target communication parameters. Certainly, since the electronic device may not know whether the tire pressure sensor has been successfully mounted on the target tire, the activation client may directly output the mounting start prompt message when determining that the writing is successful (by determining locally that the writing is successful or by receiving the write success message returned by the activation terminal), leaving it to the user to determine whether the tire pressure sensor needs to be mounted.

It should be noted that, depending on the operating manner of the tire pressure sensor, the sensor may be mounted internally (i.e., mounted on the inner wall of the target tire) or externally (i.e., screwed onto the valve stem of the target tire). The mounting method of the sensor is not limited in the present disclosure.

Thus far, the target communication parameters of the target vehicle are successfully written into the tire pressure sensor (the tire pressure sensor may then establish a wireless connection with the target vehicle using the parameters, so as to be used to submit state-related data), and the programming phase of the activation process is completed.

In step 404, the activation terminal, after establishing a connection with the target vehicle through an on-board diagnostics (OBD) interface, sends the target sensor identifier of the tire pressure sensor to the target vehicle under the instruction of the activation client.

The activation terminal needs to determine the target sensor identifier of the tire pressure sensor and send the target sensor identifier to the target vehicle, so that the target vehicle can subsequently determine, based on this identifier, which tire the tire pressure sensor transmits the received state-related data is mounted on.

In an example, the activation terminal may obtain the target sensor identifier in various ways. For example, the tire pressure sensor may be pre-written locally with its own original sensor identifier (for example, in the sensor production phase, the manufacturer allocates a unique original sensor identifier to each sensor and writes it into the local storage space of the sensor, and the original sensor identifier may be used as the unique identifier of the sensor in the entire life cycle). In this case, the tire pressure sensor may send its own original sensor identifier to the activation terminal, and the activation terminal may determine the received identifier as the target sensor identifier. In this way, the activation terminal may simply and quickly obtain the target sensor identifier, and the obtaining logic is simple and efficient.

In another example, since the tire pressure sensor mounted in the maintenance phase of the target vehicle may not be an original equipment manufacturer part of the vehicle, in order to avoid that a plurality of tire pressure sensors with a same original sensor identifier manufactured by different brands or different manufacturers are mounted in the same vehicle, which results in that the vehicle cannot effectively distinguish different sensors, the target sensor identifier may further be generated according to basic information of the tire pressure sensor. For example, the activation terminal may receive basic information of the tire pressure sensor sent by the tire pressure sensor, where the basic information may include factory information such as brand, model, and batch of the sensor, software information such as firmware version and storage space, and/or hardware information such as chip model, which is not limited in the present disclosure. In addition, the user may specify target position information corresponding to an expected mounting position of the tire pressure sensor to be activated on the target vehicle (i.e., the position of the target tire on the target vehicle) in the activation client, so that the activation client may send the information to the activation terminal. Based on this, when receiving the basic information sent by the tire pressure sensor and the target position information sent by the activation client, the activation terminal may generate the target sensor identifier according to the basic information and the target position information. The target position information of the target tire may be specified by the user in the interactive interface of the activation client according to the actual position of the target tire, such as "front left", "front right", "rear left", "rear right", etc. In this way, even if the basic information of tire pressure sensors mounted on different tires of the target vehicle is the same, different sensor identifiers may still be generated for the tire pressure sensors based on different position information, thereby avoiding an identifier conflict. Actually, the activation terminal may generate the target sensor identifiers based only on the position information, and even allocate different simple numbers (for example, 1, 2, 3) to each tire pressure sensor mounted on the target vehicle as respective sensor identifiers, which is not limited in the example of the present disclosure.

In another example, the target sensor identifier may also be sent by the activation client to the activation terminal, so that the activation terminal may receive the target sensor identifier sent by the activation client. The target sensor identifier, in addition to being sent to the vehicle through the OBD interface, needs to be written into the tire pressure sensor. The client may obtain the target sensor identifier from another device (for example, a cloud server), or may generate the target sensor identifier by itself. For example, the activation terminal, after receiving the aforementioned basic information sent by the tire pressure sensor, may forward the information to the activation client, so that the activation client may generate the target sensor identifier according to the basic information and the target position information of the target tire, and return the identifier to the activation terminal.

The tire pressure sensor may send the original sensor identifier or the basic information to the activation terminal at different occasions. For example, the tire pressure sensor may send the original sensor identifier or the basic information in response to receiving the target communication parameters (written by the electronic device or the activation terminal); or the tire pressure sensor may return the original sensor identifier or the basic information to the activation terminal in response to an identifier obtaining command sent by the activation terminal.

In addition, when the activation terminal or the activation client generates the target sensor identifier based on the basic information and the target position information, calculation may be performed in a plurality of manners. For example, a hash value of the basic information and the target position information may be calculated, and the hash value may be used as the target sensor identifier. Alternatively, target vehicle-related information of the target vehicle collected by the activation client may be obtained, and the target sensor identifier may be generated based on the basic information, the target position information, and the target vehicle-related information. The target vehicle-related information may be factory information or software and hardware information of the vehicle, or may be authorization information of the vehicle owner (for example, a verification code or a password provided by another electronic device used by the vehicle owner). By introducing the target vehicle-related information, it can be ensured that there is a unique correspondence between the generated target sensor and the target vehicle, thereby binding the tire pressure sensor and the target vehicle, and preventing the sensor from being maliciously replaced or the target vehicle from receiving tire state data uploaded by tire pressure sensors mounted on other nearby vehicles.

It should be noted that regardless of the manner in which the activation terminal determines the target sensor identifier, the format of the identifier should conform to the identifier encoding rule corresponding to the target communication parameters, to ensure that the identifier can be successfully identified by the target vehicle. For example, in a case where the target sensor identifier is the original sensor identifier, the activation client, when determining the target communication parameters, should determine the target communication parameters from the communication parameters corresponding to the identifier encoding rule of the original sensor identifier. For another example, in a case where the target sensor identifier is generated by the activation client (or the activation terminal), the activation client (or the activation terminal) may first determine the identifier encoding rule corresponding to the target communication parameters, and then generate the target sensor identifier according to an algorithm conforming to the rule, and details are not described herein again.

In an example, the user may connect the activation terminal to the vehicle through the built-in OBD interface of the activation terminal, that is, plug the terminal into the OBD interface of the vehicle through the OBD interface of the activation interface, to establish a wired connection therebetween. After the connection is established, the activation terminal may send, under the instruction of the electronic device, the target sensor identifier obtained in the foregoing manner to the target vehicle, so that the target vehicle may subsequently identify, based on the identifier, which specific tire pressure sensor the state-related data received by the target vehicle comes from.

In an example, the activation terminal may send the correspondence between the target sensor identifier of the tire pressure sensor and the target position information of the target tire to the target vehicle under the instruction of the activation client. The activation client, after obtaining the target position information of the target tire specified by the user, may send the information to the activation terminal. For example, in a case where the activation terminal obtains the original sensor identifier or the activation terminal calculates the target sensor identifier, the activation client may separately send the target position information to the activation terminal; in a case where the activation client calculates the target sensor identifier, the activation client may send the target sensor identifier and the obtained target position information together to the activation terminal (for example, in a same message), so that the activation terminal may determine a correspondence between the target sensor identifier and the target position information accordingly. For a specific process of the activation terminal to send the correspondence between the target sensor identifier and the target position information through the connection established via the OBD interface, reference may be made to descriptions in related examples, which is not limited in the example of the present disclosure.

The target vehicle, after receiving the correspondence between the target sensor identifier and the target position information which is sent by the activation terminal, may locally maintain the correspondence to subsequently determine which tire the received tire state data belongs to based on the correspondence. It should be noted that at least one tire pressure sensor may be mounted on any tire of the target vehicle, and the vehicle may maintain a correspondence between position information of each tire and sensor identifiers of all tire pressure sensors mounted on the tire.

So far, the target sensor identifier of the tire pressure sensor is successfully sent to the target vehicle, and the learning phase of the activation process is completed.

Step 406: the mounted tire pressure sensor submits state-related data of the target tire to the target vehicle according to the written target communication parameters, where the state-related data includes the target sensor identifier and tire state data collected by the tire pressure sensor.

After the activation client or the activation terminal writes the target communication parameters of the target vehicle into the tire pressure sensor, the sensor may, after being mounted, submit the state-related data of the target tire to the target vehicle according to the target communication parameters.

In an example, the tire pressure sensor may submit the state-related data of the target tire in one of the following manners. For example, the tire pressure sensor may submit the state-related data of the target tire in response to writing success of the target connection parameters. If the tire pressure sensor has not been mounted when the target communication parameters are being written, the target communication parameters may be written through the NFC connection or the Bluetooth connection; if the tire pressure sensor has been mounted when the target communication parameters are being written, the target communication parameters may be written through the Bluetooth connection (due to the limited signal transmission distance of NFC, it is difficult to establish an NFC connection with the mounted tire pressure sensor). For another example, in a case where the target connection parameters are successfully written, the tire pressure sensor may, in response to a work trigger command sent by the activation terminal, submit the state-related data of the target tire, that is, the activation terminal triggers the tire pressure sensor to start submitting the data. For another example, in a case where the target connection parameters are successfully written, the tire pressure sensor submits the state-related data of the target tire in response to receiving a radio frequency wakeup signal sent by the target vehicle, that is, the target vehicle actively wakes up the tire pressure sensor to submit the data. For another example, since the target tire is usually pressurized (that is, inflated) after the tire pressure sensor is mounted, the tire pressure sensor may submit the current state-related data for the first time when detecting that the pressure reaches an activation pressure threshold for the first time. For another example, since the target vehicle usually starts driving after the tire pressure sensor is mounted (the mounted sensor will detect a large acceleration for the first time), the tire pressure sensor may further start to submit the current state-related data for the first time when detecting that the acceleration reaches an activation acceleration threshold for the first time, and details are not described again.

It can be seen from the foregoing example that, in this solution, through mutual cooperations of devices in the activation system, on the one hand, the target sensor identifier of the tire pressure sensor can be sent to the target vehicle, so that the target vehicle identifies the sensor (that is, the learning process); on the other hand, the target communication parameters of the target vehicle can be written into the tire pressure sensor (that is, the programming process), enabling the tire pressure sensor to send the state-related data according to the parameters and to be successfully identified by the target vehicle. The tire pressure sensor mounted in the target tire may, after collecting the tire state data of the tire, send the tire state data including the target sensor identifier and the tire state data to the target vehicle, so that the target vehicle identifies, according to the target sensor identifier, that the tire state data comes from the tire pressure sensor (rather than from a tire pressure sensor mounted on another tire) and performs subsequent processing such as displaying the data or making a determination based on the data. It can be seen that the activation system in this solution may implement a complete activation process including programming and learning for the tire pressure sensor, to ensure that the mounted tire pressure sensor can operate normally in cooperation with the target vehicle.

In addition, the foregoing activation system includes a tire pressure sensor, a target vehicle, an activation terminal, and an electronic device, and only a conventional electronic device is introduced compared to a related technical solution. Compared with special tools in the related art, the activation terminal in the activation system may be connected to the target vehicle through its own OBD interface, and wirelessly connected to the electronic device and the tire pressure sensor through the built-in antenna module, so there is no need for expensive (dedicated learning tools, VCI devices or special connection lines, etc.) devices, which significantly reduces the hardware cost of the activation system. In addition, since the newly introduced electronic device may be a conventional electronic device such as a mobile phone or a tablet computer, etc., and such a device itself has a display function and a rich human-machine interface, based on the electronic device and the wireless connection, the user may control the activation terminal only by performing a simple operation in the operation interface of the electronic device, which not only lower an operating barrier and a use barrier of the user, but also effectively simplifies a hardware structure and software logic of the activation terminal, and helps implement miniaturization, portability, and minimal operation of the activation terminal. Thus, the activation system in the present disclosure controls the activation terminal by using the electronic device, implementing lightweight and miniaturization of the activation terminal, thereby reducing hardware costs and use costs in a tire pressure sensor activation process, and significantly reducing costs and improving efficiency.

In an example, the target communication parameters may further include a target submission configuration parameter, such as a submission period, and a maximum interval duration between two submissions. Based on this, the mounted tire pressure sensor may submit the state-related data of the target tire to the target vehicle according to the submission manner specified by the target submission configuration parameter. Since the target submission configuration parameter corresponds to the target vehicle model information, the submission manner specified by the parameter may be considered as a submission manner specified by the target vehicle, so that the target vehicle can successfully identify the state-related data submitted in the identification manner, to avoid abnormal situations where the state-related data cannot be identified by the vehicle.

It may be understood that the target sensor identifier in the state-related data may be used to identify a sender of the state-related message to the vehicle, that is, the vehicle may determine, according to the target sensor identifier included in the state-related data, which tire pressure sensor mounted on its own tire initiates the data. For example, after state-related data sent by a tire pressure sensor mounted on a certain tire is received, a target sensor identifier included in the data may be extracted, and position information corresponding to the target sensor identifier is queried based on a locally maintained correspondence between the sensor identifier and position information of the tire, where the position information may be used to represent an identity of the tire. In addition, the state-related data may further include state data of the tire pressure sensor itself, such as remaining power, which will not be repeated.

The tire state data collected by the tire pressure sensor may be used to characterize the current state of the target vehicle. In an example, the tire state data may include at least one of the following: tire pressure data, tire temperature data, tire acceleration data, etc. The specific data included in the tire state data is determined by the sensing elements mounted inside the tire pressure sensor, and this is not limited in the examples of the present disclosure. In order to facilitate the user to sense the tire state, the vehicle may display the tire state data at the instrument panel or the central control screen, such as displaying "the current tire pressure of the left front wheel is 2.3 Bar" and "the current temperature of the right front wheel is 30° C" or the like, in the form of text, picture or animation. Certainly, to further reduce understanding difficulty of the user and improve driving safety, the target vehicle may also determine, based on the tire state data, whether the current state of the target tire is normal, and send alert information to the user when the target tire is in an abnormal state (for example, the tire pressure is excessively low or the temperature is excessively high).

If the state-related data of the target vehicle sent by the tire pressure sensor to the vehicle can be correctly identified by the target vehicle, it indicates that the tire pressure sensor is successfully matched with the target vehicle, at this point, the matching process of the tire pressure sensor may end, for example, the maintenance operations for the target tire may end. Thereafter, during operation of the target vehicle, the tire pressure sensor may automatically submit the state-related data of the target vehicle to the target vehicle according to the foregoing submission manner.

In an example, the electronic device may upload the matching-related data involved in the above matching process to the server for maintenance and management. The matching-related data may include data related to the tire pressure sensor (such as the target sensor identifier, brand, manufacturer, and price), data related to the vehicle (such as vehicle brand, vehicle model, and vehicle owner information), and data related to the user (such as the user name for logging in to a client program of the electronic device, and the time and location at which this matching occurs). The server may provide services for electronic devices respectively used by a plurality of users. The server, after obtaining the related data uploaded by each electronic device, may perform data management and mining from a plurality of dimensions such as brand (of vehicles or tire pressure sensors), maintenance store, and user based on the data, to implement efficient management and data reuse of massive data.

In an example, since the activation terminal may be connected to the target vehicle through the OBD interface, and the OBD interface has rich vehicle data interaction functions, the activation terminal may further integrate a function of collecting vehicle state data. For example, the activation terminal may collect target vehicle state data (such as a fault code and a running log) of the target vehicle and submit the data to the activation client, so that the user can view the data in the client. In addition, the activation terminal may, in response to the processing command sent by the activation client for the target vehicle state data, further trigger the target vehicle to process the target vehicle state data. Taking the fault code as an example, if the fault code collected by the activation terminal indicates that the current temperature of the target vehicle is too high, the wiper has a fault and/or the sunroof opening function is abnormal, etc., the user may determine whether the above fault exists by himself/herself: if yes, the fault removal processing may be performed; if not (indicating that the fault is a false alarm), the corresponding fault code may be deleted in the electronic device.

In addition, in a case where the activation terminal further includes a data interface module, the activation terminal may further be connected to a data management device by using a physical transmission line, and the collected vehicle state data is transmitted to a processing device through the physical transmission line, helping the latter to perform processing. The processing device may be the foregoing electronic device, or may be a dedicated diagnostic tool with rich vehicle diagnostic functions. In a case where the processing device is a dedicated diagnostic tool, the activation terminal in this solution may be used in cooperation with the dedicated diagnostic tool, to provide richer and diversified maintenance and diagnostic services for the target vehicle and meet more user requirements.

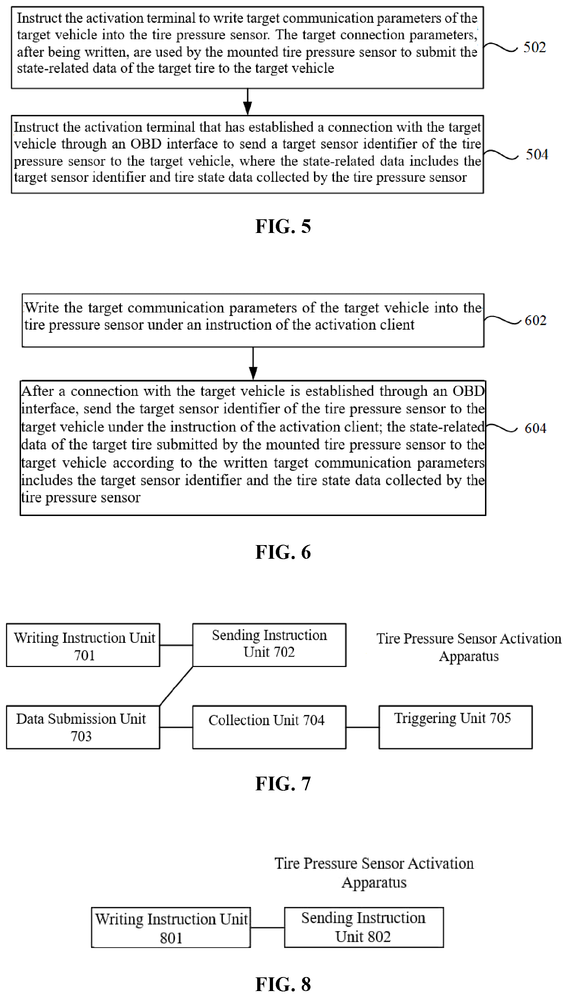

Corresponding to the foregoing tire pressure sensor activation method, the present disclosure further provides a flowchart of another tire pressure sensor activation method. As shown in FIG. 5, the method is applied to an activation client running on an electronic device in an activation system. The activation system further includes an activation terminal, a tire pressure sensor, and a target vehicle. The tire pressure sensor is configured to be mounted on a target tire of the target vehicle. The method includes the following steps 502 to 504.

Step 502: the activation terminal is instructed to write target communication parameters of the target vehicle into the tire pressure sensor. The target connection parameters, after being written, are used by the mounted tire pressure sensor to submit the state-related data of the target tire to the target vehicle.

Step 504: the activation terminal that has established a connection with the target vehicle through an OBD interface is instructed to send a target sensor identifier of the tire pressure sensor to the target vehicle, where the state-related data includes the target sensor identifier and tire state data collected by the tire pressure sensor.

Corresponding to the foregoing tire pressure sensor activation methods, the present disclosure further provides a flowchart of yet another tire pressure sensor activation method. As shown in FIG. 6, the method is applied to an activation terminal in an activation system. The activation system further includes a tire pressure sensor, a target vehicle, and an electronic device running an activation client, where the tire pressure sensor is configured to be mounted on a target tire of the target vehicle. The method includes the following steps 602 to 604.

Step 602: the target communication parameters of the target vehicle are written into the tire pressure sensor under an instruction of the activation client.

Step 604, after a connection with the target vehicle is established through an OBD interface, the target sensor identifier of the tire pressure sensor is sent to the target vehicle under the instruction of the activation client; the state-related data of the target tire submitted by the mounted tire pressure sensor to the target vehicle according to the written target communication parameters includes the target sensor identifier and the tire state data collected by the tire pressure sensor.

For specific implementation processes of the steps shown in FIG. 5 and FIG. 6, reference may be made to the description of the foregoing examples, and details are not described herein again.

Corresponding to a foregoing example of the tire pressure sensor activation method, the present disclosure further provides an example of a tire pressure sensor activation apparatus. The activation apparatus is applied to an activation system, where the activation system includes an activation terminal, a tire pressure sensor, a target vehicle, and an electronic device running an activation client, and the tire pressure sensor is configured to be mounted on a target tire of the target vehicle. As shown in FIG. 7, the apparatus includes the following.

The writing instruction unit 701 is configured to cause the activation client to instruct the activation terminal to write target communication parameters of the target vehicle into the tire pressure sensor.

The sending instruction unit 702 is configured to cause the activation terminal, after establishing a connection with the target vehicle through an on-board diagnostic (OBD) interface, to send a target sensor identifier of the tire pressure sensor to the target vehicle under an instruction of the activation client.

The data submission unit 703 is configured to enable the mounted tire pressure sensor to submit state-related data of the target tire to the target vehicle according to the written target communication parameters, wherein the state-related data comprises the target sensor identifier and tire state data collected by the tire pressure sensor.

In an example, the electronic device interacts with the activation terminal, and the activation terminal interacts with the tire pressure sensor each through a wireless connection.

In an example, the first wireless connection established between the electronic device and the activation terminal is a Bluetooth connection or a WiFi connection.

The second wireless connection established between the activation terminal and the tire pressure sensor is an NFC connection or a wireless radio frequency connection.

In an example, the writing instruction unit 701 is specifically configured to cause the activation client to perform the following.

The activation is caused to obtain the target communication parameters of the target vehicle and sending a parameter writing command comprising the target communication parameters to the activation terminal, to instruct the activation terminal to write the target communication parameters into the tire pressure sensor.

Or the activation is caused to determine parameter indication information of the target communication parameters and send a determining and writing command comprising the parameter indication information to the activation terminal, to instruct the activation terminal to determine the target communication parameters according to the parameter indication information and write the target communication parameters into the tire pressure sensor.

In an example, the writing instruction unit 701 is specifically configured to cause the activation client to perform the following.

The activation client, in response to a vehicle model specifying operation performed by a user, obtains, according to target vehicle model information of the specified target vehicle, target communication parameters matching the target vehicle model information.

In a case where a third wireless connection is established between the electronic device and the target vehicle, the activation client requests and obtains the target communication parameters from the target vehicle through the third wireless connection.

In a case where a fourth wireless connection is established between the electronic device and an activated tire pressure sensor mounted and activated on any tire of the target vehicle, the activation client reads the target communication parameters written into the activated tire pressure sensor through the fourth wireless connection.

In an example, the writing instruction unit 701 is specifically configured to cause the activation client to perform the following.

The activation client queries target communication parameters corresponding to the target vehicle model information from a vehicle model parameter table locally stored in the electronic device.

Or the activation client initiates a parameter obtaining request comprising the target vehicle model information of the target vehicle to a pre-associated activation server, and receives target communication parameters matching the target vehicle model information returned by the activation server in response to the request, wherein the target communication parameters are obtained by the activation server querying a locally stored vehicle model parameter table.

The vehicle model parameter table is used to record a correspondence between vehicle model information of a vehicle and communication parameters of the vehicle.

In an example, the writing instruction unit 701 is specifically configured to cause the activation client to perform one of the following.

In a case where the first wireless connection is successfully established between the electronic device and the activation terminal, in response to a first sending operation performed by the user, the activation client sends a writing command comprising the target communication parameters to the activation terminal through the first wireless connection, to instruct the activation terminal to write the target communication parameters into the tire pressure sensor through the second wireless connection in response to the detected first writing operation.

In a case where the first wireless connection is successfully established between the electronic device and the activation terminal, in response to a second sending operation performed by the user, the activation client sends the target communication parameters to the activation terminal through the first wireless connection; and in response to a second writing operation performed by the user, the activation client sends a writing command for the target communication parameters to the activation terminal, to instruct the activation terminal to write the target communication parameters into the tire pressure sensor through the second wireless connection.

In a case where the first wireless connection is successfully established between the electronic device and the activation terminal and the second wireless connection is successfully established between the activation terminal and the tire pressure sensor, in response to a third writing operation performed by the user for the target communication parameters, the activation client sends a writing command comprising the target communication parameters to the activation terminal through the first wireless connection, to instruct the activation terminal to write the target communication parameters into the tire pressure sensor through the second wireless connection.

In an example, the parameter indication information includes target vehicle model information of the target vehicle, and the writing instruction unit 701 is specifically configured to cause the activation client to perform the following.

The activation client queries the target communication parameters corresponding to the target vehicle model information from a vehicle model parameter table locally stored in the activation terminal, wherein the vehicle model parameter table is used to record a correspondence between vehicle model information of a vehicle and communication parameters of the vehicle.

In an example, the writing instruction unit 701 is specifically configured to enable the activation client to perform the following.

After the tire pressure sensor is mounted, the activation client instructs the activation terminal to write the target communication parameter of the target vehicle into the tire pressure sensor.

Before starting mounting of the tire pressure sensor, the activation client instructs the activation terminal to write the target communication parameters of the target vehicle into the tire pressure sensor, and in a case where it is determined that the writing is successful, the activation terminal outputs a mounting start prompt message to the user to instruct the user to start to mount the tire pressure sensor.

In an example, the sending instruction unit 702 is specifically configured to cause the activation terminal to perform one of the following.

The activation terminal, in response to receiving an original sensor identifier sent by the tire pressure sensor, determines the original sensor identifier as the target sensor identifier.

The activation terminal receives the target sensor identifier sent by the activation client, wherein the target sensor identifier is used to be written into the tire pressure sensor.

The activation terminal, in a case where basic information of the tire pressure sensor sent by the tire pressure sensor and target position information of the target tire sent by the activation client are received, generates the target sensor identifier according to the basic information and the target position information.

In an example, the sending instruction unit 702 is specifically configured to cause the activation terminal to perform the following.

The activation terminal sends a correspondence between the target sensor identifier of the tire pressure sensor and the target position information of the target tire to the target vehicle under the instruction of the activation client.

In an example, the apparatus further includes the following.

A collection unit 704 is configured to cause the activation terminal to collect target vehicle state data of the target vehicle and submit the target vehicle state data to the activation client.

A triggering unit 705 is configured to cause the activation terminal to trigger the target vehicle to process the target vehicle state data in response to a processing command sent by the activation client for the target vehicle state data.

Corresponding to the foregoing example of another tire pressure sensor activation method, the present disclosure further provides an example of another tire pressure sensor activation apparatus. The activation apparatus is applied to an activation client running on an electronic device in an activation system, the activation system further includes an activation terminal, a tire pressure sensor, and a target vehicle, and the tire pressure sensor is configured to be mounted on a target tire of the target vehicle. As shown in FIG. 8, the apparatus includes the following.

The writing instruction unit 801 is configured to instruct the activation terminal to write target communication parameters of the target vehicle into the tire pressure sensor, wherein the written target connection parameters are used by the mounted tire pressure sensor to submit state-related data of the target tire to the target vehicle.

The sending instruction unit 802 is configured to instruct the activation terminal that establishes a connection with the target vehicle through an OBD interface to send a target sensor identifier of the tire pressure sensor to the target vehicle, wherein the state-related data comprises the target sensor identifier and tire state data collected by the tire pressure sensor.

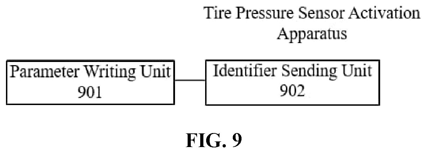

Corresponding to the foregoing example of still another tire pressure sensor activation method, the present disclosure further provides still another example of a tire pressure sensor activation apparatus. The activation apparatus is applied to an activation terminal in an activation system, the activation system further includes a tire pressure sensor, a target vehicle, and an electronic device running an activation client, and the tire pressure sensor is configured to be mounted on a target tire of the target vehicle. As shown in FIG. 9, the apparatus includes the following.

A parameter writing unit 901 is configured to write target communication parameters of the target vehicle into the tire pressure sensor under an instruction of the activation client.

An identifier sending unit 902 is configured to, after establishing a connection with the target vehicle through an OBD interface, send a target sensor identifier of the tire pressure sensor to the target vehicle under an instruction of the activation client, wherein state-related data of the target tire submitted by the mounted tire pressure sensor to the target vehicle according to the written target communication parameters comprises the target sensor identifier and tire state data collected by the tire pressure sensor.

Regarding the apparatus in the above examples, the specific manner in which each unit performs operations has been described in detail in the examples related to the method, and will not be described in detail here.

Corresponding to the foregoing examples, the present disclosure further provides a tire pressure sensor, where the tire pressure sensor is configured to be mounted on a target tire of a target vehicle, and the tire pressure sensor is configured to cooperate with an activation terminal, the target vehicle, and an electronic device running an activation client to implement the tire pressure sensor activation method according to any one of the foregoing implementations.

Corresponding to the foregoing example, the present disclosure further provides a target vehicle, where the target vehicle is equipped with a tire pressure sensor, and the target vehicle is configured to cooperate with an activation terminal, the tire pressure sensor, and an electronic device running an activation client to implement the tire pressure sensor activation method according to any one of the foregoing implementations.

Other examples of the present disclosure will be apparent to those skilled in the art from consideration of the specification and practice of the disclosure disclosed herein. The present disclosure is intended to cover any variations, uses, or adaptations of this application following the general principles thereof and including such departures from the present disclosure as come within known or customary practice in the art. It is intended that the specification and examples be considered as exemplary only, with a true scope and spirit of the disclosure being indicated by the following claims.

It should be understood that the present disclosure is not limited to the precise structures described above and shown in the drawings, and various modifications and changes may be made without departing from the scope thereof. The scope of the present disclosure is limited only by the appended claims.

It should be noted that, in the present disclosure, relational terms such as first and second are only used to distinguish one entity or operation from another entity or operation, and do not necessarily require or imply any such actual relationship or order between these entities or operations. The terms "comprises," "comprising," or any other variation thereof, are intended to cover a non-exclusive inclusion, such that a process, method, article, or device that comprises a list of elements does not include only those elements but may include other elements not expressly listed or inherent to such process, method, article, or device. An element proceeded by "comprises a..." does not, without more constraints, preclude the existence of additional identical elements in the process, method, article, or device that comprises the element.

The method and device provided by the examples of the present disclosure are described in detail above, specific examples are used herein to illustrate the principle and implementation of the present disclosure, and the description of the above examples is only used to help understand the method and core idea of the present disclosure; meanwhile, for those skilled in the art, according to the idea of the present disclosure, there will be changes in the specific implementation and application scope, and in summary, the content of the present specification should not be understood as limiting the present disclosure.

## Claims

1. A tire pressure sensor activation method, wherein the method is applied to an activation system, the activation system comprises an activation terminal, a tire pressure sensor, a target vehicle, and an electronic device running an activation client, the tire pressure sensor is configured to be mounted on a target tire of the target vehicle, and the method comprises:
instructing, by the activation client, the activation terminal to write target communication parameters of the target vehicle into the tire pressure sensor;
sending, by the activation terminal, a target sensor identifier of the tire pressure sensor to the target vehicle under an instruction of the activation client after the activation terminal establishes a connection with the target vehicle through an on-board diagnostics, OBD, interface; and
submitting, by the mounted tire pressure sensor, state-related data of the target tire to the target vehicle according to the written target communication parameters, wherein the state-related data comprises the target sensor identifier and tire state data collected by the tire pressure sensor.

2. The method according to claim 1, wherein interaction between the electronic device and the activation terminal and interaction between the activation terminal and the tire pressure sensor are implemented through wireless connections.

3. The method according to claim 2, wherein
a first wireless connection between the electronic device and the activation terminal is a Bluetooth connection or a WiFi connection;
a second wireless connection between the activation terminal and the tire pressure sensor is an NFC connection or a wireless radio frequency connection.

4. The method according to claim 1, wherein the instructing, by the activation client, the activation terminal to write the target communication parameters of the target vehicle into the tire pressure sensor comprises:
obtaining the target communication parameters of the target vehicle and sending a parameter writing command comprising the target communication parameters to the activation terminal, to instruct the activation terminal to write the target communication parameters into the tire pressure sensor; or
determining parameter indication information of the target communication parameters and sending a determining and writing command comprising the parameter indication information to the activation terminal, to instruct the activation terminal to determine the target communication parameters according to the parameter indication information and write the target communication parameters into the tire pressure sensor.

5. The method according to claim 4, wherein obtaining, by the activation client, the target communication parameters of the target vehicle comprises one of:
in response to a vehicle model specifying operation performed by a user, obtaining, according to target vehicle model information of the specified target vehicle, target communication parameters matching the target vehicle model information;
in a case where a third wireless connection is established between the electronic device and the target vehicle, requesting and obtaining the target communication parameters from the target vehicle through the third wireless connection; and
in a case where a fourth wireless connection is established between the electronic device and an activated tire pressure sensor mounted and activated on any tire of the target vehicle, reading the target communication parameters written into the activated tire pressure sensor through the fourth wireless connection.

6. The method according to claim 5, wherein obtaining, by the activation client, according to the target vehicle model information of the specified target vehicle, the target communication parameters matching the target vehicle model information comprises:
querying target communication parameters corresponding to the target vehicle model information from a vehicle model parameter table locally stored in the electronic device; or
initiating a parameter obtaining request comprising the target vehicle model information of the target vehicle to a pre-associated activation server, and receiving target communication parameters matching the target vehicle model information returned by the activation server in response to the request, wherein the target communication parameters are obtained by the activation server querying a locally stored vehicle model parameter table;
wherein the vehicle model parameter table is used to record a correspondence between vehicle model information of a vehicle and communication parameters of the vehicle.

7. The method according to claim 4, wherein sending, by the activation client, the parameter writing command comprising the target communication parameters to the activation terminal to instruct the activation terminal to write the target communication parameters into the tire pressure sensor comprises one of:
in a case where a first wireless connection is successfully established between the electronic device and the activation terminal, in response to a first sending operation performed by a user, sending a writing command comprising the target communication parameters to the activation terminal through the first wireless connection, to instruct the activation terminal to write the target communication parameters into the tire pressure sensor through a second wireless connection in response to a detected first writing operation;
in a case where the first wireless connection is successfully established between the electronic device and the activation terminal, in response to a second sending operation performed by the user, sending the target communication parameters to the activation terminal through the first wireless connection; and in response to a second writing operation performed by the user, sending a writing command for the target communication parameters to the activation terminal, to instruct the activation terminal to write the target communication parameters into the tire pressure sensor through the second wireless connection; and
in a case where the first wireless connection is successfully established between the electronic device and the activation terminal and the second wireless connection is successfully established between the activation terminal and the tire pressure sensor, in response to a third writing operation performed by the user for the target communication parameters, sending a writing command comprising the target communication parameters to the activation terminal through the first wireless connection, to instruct the activation terminal to write the target communication parameters into the tire pressure sensor through the second wireless connection.

8. The method according to claim 4, wherein the parameter indication information comprises target vehicle model information of the target vehicle, and determining, by the activation terminal, the target communication parameters according to the parameter indication information comprises:
querying the target communication parameters corresponding to the target vehicle model information from a vehicle model parameter table locally stored in the activation terminal, wherein the vehicle model parameter table is used to record a correspondence between vehicle model information of a vehicle and communication parameters of the vehicle.

9. The method according to claim 1, wherein instructing, by the activation client, the activation terminal to write the target communication parameters of the target vehicle into the tire pressure sensor comprises:
after the tire pressure sensor is mounted, instructing the activation terminal to write the target communication parameters of the target vehicle into the tire pressure sensor; or
before starting mounting of the tire pressure sensor, instructing the activation terminal to write the target communication parameters of the target vehicle into the tire pressure sensor, and in a case where it is determined that the writing is successful, outputting a mounting start prompt message to a user to instruct the user to start to mount the tire pressure sensor.

10. The method according to claim 1, wherein obtaining, by the activation terminal, the target sensor identifier comprises one of:
in response to receiving an original sensor identifier sent by the tire pressure sensor, determining the original sensor identifier as the target sensor identifier;
receiving the target sensor identifier sent by the activation client, wherein the target sensor identifier is configured to be written into the tire pressure sensor;
in a case where basic information of the tire pressure sensor sent by the tire pressure sensor and target position information of the target tire sent by the activation client are received, generating the target sensor identifier according to the basic information and the target position information.

11. The method according to claim 1, wherein sending, by the activation terminal, the target sensor identifier of the tire pressure sensor to the target vehicle under the instruction of the activation client comprises:
sending a correspondence between the target sensor identifier of the tire pressure sensor and target position information of the target tire to the target vehicle under the instruction of the activation client.

12. The method according to claim 1, further comprising:
collecting, by the activation terminal, target vehicle state data of the target vehicle and submitting the target vehicle state data to the activation client;
triggering, by the activation terminal, the target vehicle to process the target vehicle state data in response to a processing command sent by the activation client for the target vehicle state data.

13. A tire pressure sensor activation method, wherein the method is applied to an activation client running on an electronic device in an activation system, the activation system further comprises an activation terminal, a tire pressure sensor, and a target vehicle, the tire pressure sensor is configured to be mounted on a target tire of the target vehicle, and the method comprises:
instructing the activation terminal to write target communication parameters of the target vehicle into the tire pressure sensor, wherein the written target connection parameters are used by the mounted tire pressure sensor to submit state-related data of the target tire to the target vehicle; and
instructing the activation terminal that establishes a connection with the target vehicle through an OBD interface to send a target sensor identifier of the tire pressure sensor to the target vehicle, wherein the state-related data comprises the target sensor identifier and tire state data collected by the tire pressure sensor.

14. A tire pressure sensor activation method, wherein the method is applied to an activation terminal in an activation system, the activation system further comprises a tire pressure sensor, a target vehicle, and an electronic device running an activation client, the tire pressure sensor is configured to be mounted on a target tire of the target vehicle, and the method comprises:
writing target communication parameters of the target vehicle into the tire pressure sensor under an instruction of the activation client; and
after establishing a connection with the target vehicle through an OBD interface, sending a target sensor identifier of the tire pressure sensor to the target vehicle under an instruction of the activation client, wherein state-related data of the target tire submitted by the mounted tire pressure sensor to the target vehicle according to the written target communication parameters comprises the target sensor identifier and tire state data collected by the tire pressure sensor.

15. A tire pressure sensor activation system, comprising an activation terminal, a tire pressure sensor, a target vehicle, and an electronic device running an activation client, wherein the tire pressure sensor is configured to be mounted on a target tire of the target vehicle, wherein
the activation client is configured to instruct the activation terminal to write target communication parameters of the target vehicle into the tire pressure sensor;
the activation terminal is configured to send a target sensor identifier of the tire pressure sensor to the target vehicle under an instruction of the activation client after establishing a connection with the target vehicle through an OBD interface; and
the tire pressure sensor is configured to submit state-related data of the target tire to the target vehicle according to the written target communication parameters after being mounted, wherein the state-related data comprises the target sensor identifier and tire state data collected by the tire pressure sensor.

16. A tire pressure sensor activation apparatus, wherein the apparatus is applied to an activation system, the activation system comprises an activation terminal, a tire pressure sensor, a target vehicle, and an electronic device running an activation client, the tire pressure sensor is configured to be mounted on a target tire of the target vehicle, and the apparatus comprises:
a writing instruction unit, configured to cause the activation client to instruct the activation terminal to write target communication parameters of the target vehicle into the tire pressure sensor;
a sending instruction unit, configured to cause the activation terminal, after establishing a connection with the target vehicle through an on-board diagnostic, OBD, interface, to send a target sensor identifier of the tire pressure sensor to the target vehicle under an instruction of the activation client; and
a data submission unit, configured to enable the mounted tire pressure sensor to submit state-related data of the target tire to the target vehicle according to the written target communication parameters, wherein the state-related data comprises the target sensor identifier and tire state data collected by the tire pressure sensor.

17. A tire pressure sensor activation apparatus, wherein the apparatus is applied to an activation client running on an electronic device in an activation system, the activation system further comprises an activation terminal, a tire pressure sensor, and a target vehicle, the tire pressure sensor is configured to be mounted on a target tire of the target vehicle, and the apparatus comprises:
a writing instruction unit, configured to instruct the activation terminal to write target communication parameters of the target vehicle into the tire pressure sensor, wherein the written target connection parameters are used by the mounted tire pressure sensor to submit state-related data of the target tire to the target vehicle; and
a sending instruction unit, configured to instruct the activation terminal that establishes a connection with the target vehicle through an OBD interface to send a target sensor identifier of the tire pressure sensor to the target vehicle, wherein the state-related data comprises the target sensor identifier and tire state data collected by the tire pressure sensor.

18. A tire pressure sensor activation apparatus, wherein the apparatus is applied to an activation terminal in an activation system, the activation system further comprises a tire pressure sensor, a target vehicle, and an electronic device running an activation client, the tire pressure sensor is configured to be mounted on a target tire of the target vehicle, and the apparatus comprises:
a parameter writing unit, configured to write target communication parameters of the target vehicle into the tire pressure sensor under an instruction of the activation client; and
an identifier sending unit, configured to, after establishing a connection with the target vehicle through an OBD interface, send a target sensor identifier of the tire pressure sensor to the target vehicle under an instruction of the activation client, wherein state-related data of the target tire submitted by the mounted tire pressure sensor to the target vehicle according to the written target communication parameters comprises the target sensor identifier and tire state data collected by the tire pressure sensor.

19. An activation terminal, comprising a control module and a first antenna module, a second antenna module, an OBD interface and a power module that are connected to the control module, wherein
the activation terminal establishes a wireless connection with an electronic device through the first antenna module, establishes a wireless connection with a tire pressure sensor through the second antenna module, and connects to a target vehicle through the OBD interface; and
the activation terminal is configured to write target communication parameters of the target vehicle into the tire pressure sensor under an instruction of an activation client running in the electronic device, and send a target sensor identifier of the tire pressure sensor to the target vehicle under an instruction of the activation client.

20. The activation terminal according to claim 19, wherein
the wireless connection established with the electronic device through the first antenna module is a Bluetooth connection or a WiFi connection;
and/or,
the wireless connection established with the tire pressure sensor through the second antenna module is an NFC connection or a wireless radio frequency connection.

21. The activation terminal according to claim 19, further comprising:
a data interface module, configured to connect to a data management device, so that the activation terminal performs data interaction with the data management device.

22. The activation terminal according to claim 19, further comprising:
an operation sensing module, configured to sense a preset operation performed by a user for the activation terminal; and/or
a state output module, configured to output running state information of the activation terminal.

23. A tire pressure sensor, wherein the tire pressure sensor is configured to be mounted on a target tire of a target vehicle, and the tire pressure sensor is configured to cooperate with an activation terminal, the target vehicle, and an electronic device running an activation client to implement the tire pressure sensor activation method according to any one of claims 1 to 14.

24. A target vehicle, wherein the target vehicle is equipped with a tire pressure sensor, and the target vehicle is configured to cooperate with an activation terminal, the tire pressure sensor, and an electronic device running an activation client to implement the tire pressure sensor activation method according to any one of claims 1 to 14.
